# EUROPEAN PATENT APPLICATION

(11) **EP 4 810 413 A1**
(43) Date of publication of application: **23.09.2026**
(21) Application number: 25165281.4
(22) Date of filing: 21.03.2025
(51) Int. Cl.: B65G 47/14, B65G 47/24

(54) **DEVICE FOR SORTING ARTICLES**

(71) Applicant: YKK STOCKO Fasteners GmbH, 42327 Wuppertal (DE)
(72) Inventor: Wetzel, Markus, 42107 Wuppertal (DE); Fabich, Matthias, 40822 Mettmann (DE)
(74) Representative: Leinweber & Zimmermann

(57) **Abstract**

The invention relates to a device for sorting articles (16) providing at least one path (12, 14) along which the articles can be moved, said path comprising a first sliding surface (24) having a front end (30) and a second sliding surface (26) positioned downstream of the first sliding surface and having a rear end (34).

According to the invention, said first and second sliding surfaces (24, 26) have predetermined widths and a plane (32) tangent to the second sliding surface at the rear end thereof includes an angle of less than 180° with a plane (36) tangent to the first sliding surface at the front end thereof, a stop (38) being positioned at a predetermined distance from said front end of said first sliding surface.

## Description

The invention refers to a device for sorting articles providing at least one path along which the articles can be moved.

Particularly, the invention refers to a device for sorting articles having a first side which is flat and a second side with a cavity. In other words, the articles to be sorted are in the form of a pot or a bowl.

What is meant by sorting is to discriminate the articles with view to their orientation, i.e. whether they are oriented lying on their first side or lying on their second side.

Respective sorting devices are known in the prior art, cf. EP 1 020 370 B1, for example.

Conventional sorting devices, however, perform said discrimination on the basis of asymmetry at the outer edge of a flat article, for example.

The object underlying the invention is to provide a sorting device for articles which have no asymmetry at their outer edges which can serve as a basis for the discriminating regarding their orientation.

According to the invention, the above object is achieved by a device for sorting articles providing at least one path along which the articles can be moved, said path comprising a first sliding surface having a front end and a second sliding surface positioned downstream of the first sliding surface and having a rear end, wherein said first and second sliding surfaces have predetermined widths and a plane tangent to the second sliding surface at the rear end thereof includes an angle of less than 180° with a plane tangent to the first sliding surface at the front end thereof, a stop being positioned at a predetermined distance from said front end of said first sliding surface.

If the sorting device according to the present invention is to be used for sorting the abovementioned articles having a first flat side and a second side with a cavity, at least the front end region of the first sliding surface and the rear end region of the second sliding surface can be dimensioned so that they make up a nose extending into the cavity of articles moving along said path. To this end, the widths of the first and second sliding surfaces must be dimensionally adapted to the dimensions of the cavity. The same applies to the angle between the plane tangent to the second sliding surface at the rear end thereof and the plane tangent to the first sliding surface at the front end thereof.

Particularly, when said width and said angle are suitably chosen, the nose made up by the first and second sliding surfaces can "dive" into the cavity of an article moving along the first and second sliding surfaces having an orientation with the second side of the article facing the first sliding surface.

Contrary thereto, in case that not the second side of the respective article faces the first sliding surface, but the first side which is flat faces the first sliding surface, said nose cannot dive into the cavity so that the article remains with its flat first side on the plane tangent to the first sliding surface at the front end thereof. If the article is moved having the said orientation, it will abut at the stop which is positioned at a predetermined distance from the front end of said first sliding surface in the moving direction of the article. Thus, it will not be moved further. Said predetermined distance is to be dimensioned adapted to the length of the articles in the moving direction.

As detailed above, with the device for sorting articles according to the invention, articles oriented with their second side facing the first sliding surface can be moved on to the second sliding surface with the nose diving into the cavity, whereas articles which are oriented with their first (flat) side facing the first sliding surface cannot be moved on, but abut against the stop. As a result, the articles are discriminated on the basis of their orientation. Only those articles which are oriented with their second side facing the first sliding surface are moved on, e.g. to the next station of a production line. Contrary thereto, those articles which are oriented with their first side facing the first sliding surface are blocked from moving on. For example, they can be returned into a magazine for feeding the sorting device.

Principally, the widths of the first and second sliding surfaces can be chosen according to the circumstances. Said widths, however, should be smaller than the dimensions of a cavity of the articles to be sorted, at least in the region thereof making up the nose meant for diving into said cavity.

Said first and second sliding surfaces can be adjacent to one another. In some embodiments, however, there is a third (sliding) surface or a gap between the first and second sliding surfaces. Said third surface can be of any kind, e.g. flat, curved, stepped or any combination thereof. The flat form is preferred as the most efficient one.

Preferably the angle included by said planes tangent to said first and second sliding surfaces is chosen to avoid that said first and second surfaces (and a possible third surface) are touched by the bottom of a cavity of articles moving along said path. Preferably said angle is in the range of from 96° to 116°.

Thereby, a smooth movement of the articles along the first and second sliding surfaces is achieved.

According to the invention, said articles can be moved along the path by any suitable means. It is, however, preferred that the force for moving said articles along the path results from gravity.

This makes the overall construction of the sorting device according to the invention simple and effective.

In order to use gravity for moving the articles, it is preferred according to the invention that a motor is provided adapted to move the device relative to the direction of gravity. Said movement is rotation, for example.

Particularly, thereby gravity can be used in order not only to move the articles along said path, but also to return articles with a certain orientation into a magazine for feeding the sorting device.

Preferably, said distance between said first sliding surface and said stop is less than the distance between a leading end of the articles and their center of gravity. Thereby, it is made sure that the articles abut against the stop before they tip over the front end of the first sliding surface.

The invention is explained in more detail in the following, using a preferred example embodiment with reference to the enclosed drawing with more details.

They show:
- Fig. 1: a sorting ring of a device for sorting articles according to the invention,
- Fig. 2: an example of an article to be sorted,
- Fig. 3: an article running through the sorting ring in a first stage,
- Fig. 4: the article of Fig. 3 in a second stage,
- Fig. 5: the article of Figs. 3 and 4 in a different orientation,
- Fig. 6: the same as Fig. 5, but on a larger scale, and
- Fig. 7: a schematical detail of the sorting ring.

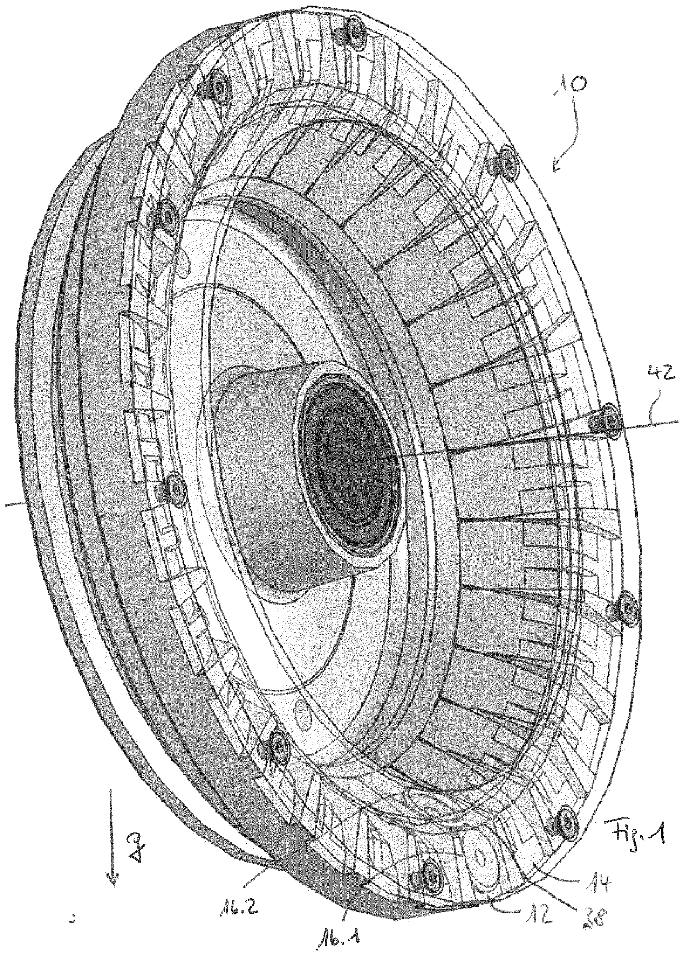

Fig. 1 shows a sorting ring 10 with multiple paths, two of which are designated with 12 and 14. The direction of gravity is designated by arrow g.

Fig. 1 shows two articles 16.1 and 16.2 to be sorted by the sorting device with the sorting ring according to Fig. 1. Said articles 16 are top parts of snap buttons.

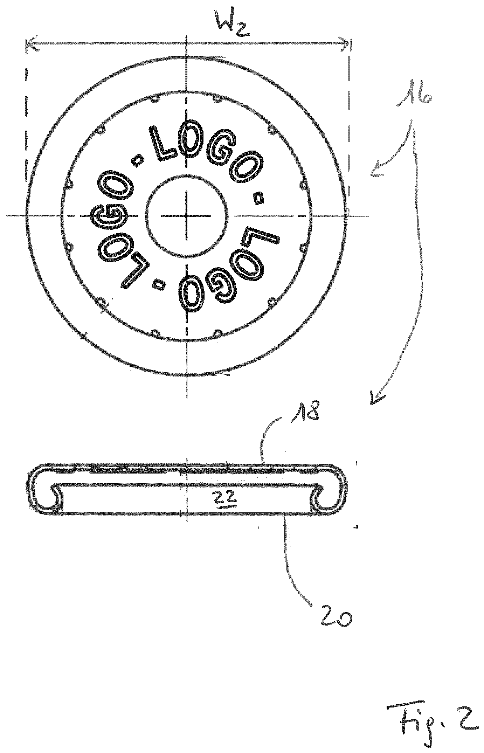

Details of said articles are shown in Fig. 2. Particularly, articles 16 have a first flat side 18 and a second side 20 with a cavity 22. A width W₁ of the paths of sorting ring 10 is slightly greater than a width W₂ of articles 16 so that articles 16 can move through said paths due to gravity.

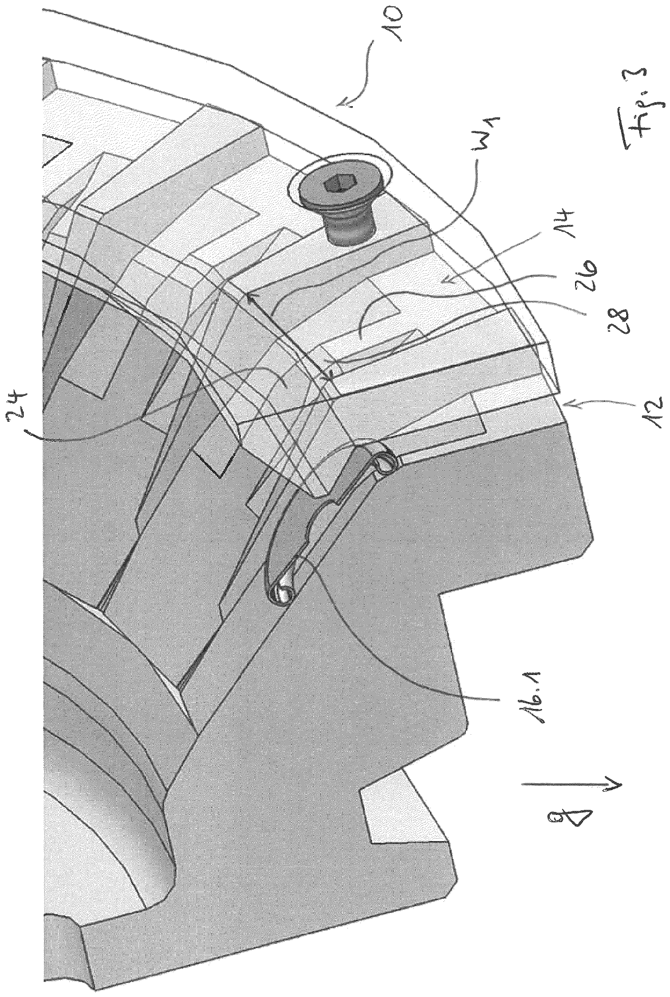

As is shown in detail in Fig. 3, path 14 as all the other paths, has first, second and third sliding surfaces 24, 26 and 28 which altogether make up a nose-like structure.

Fig. 1 shows two articles 16.1 and 16.2 moving along path 12. Article 16.1 is facing sliding surfaces 24, 26 and 28 with its second side 20, whereas article 16.2 is facing sliding surfaces 24, 26 and 28 with its first side 18.

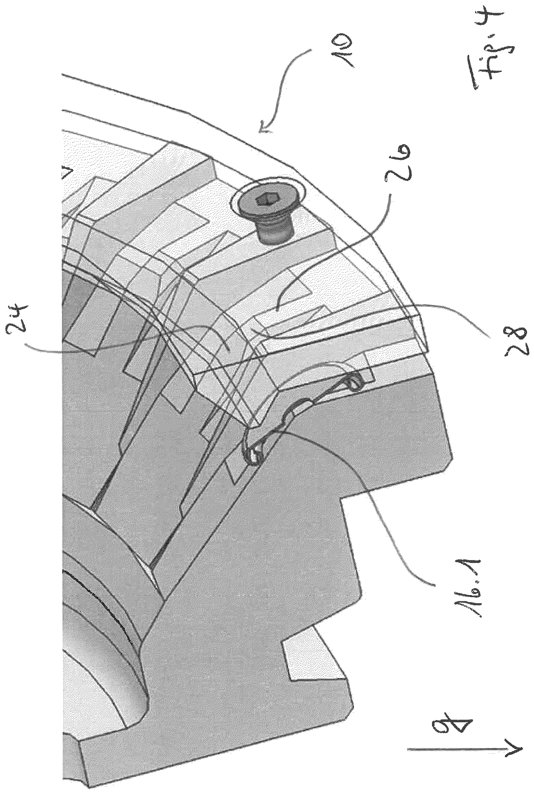

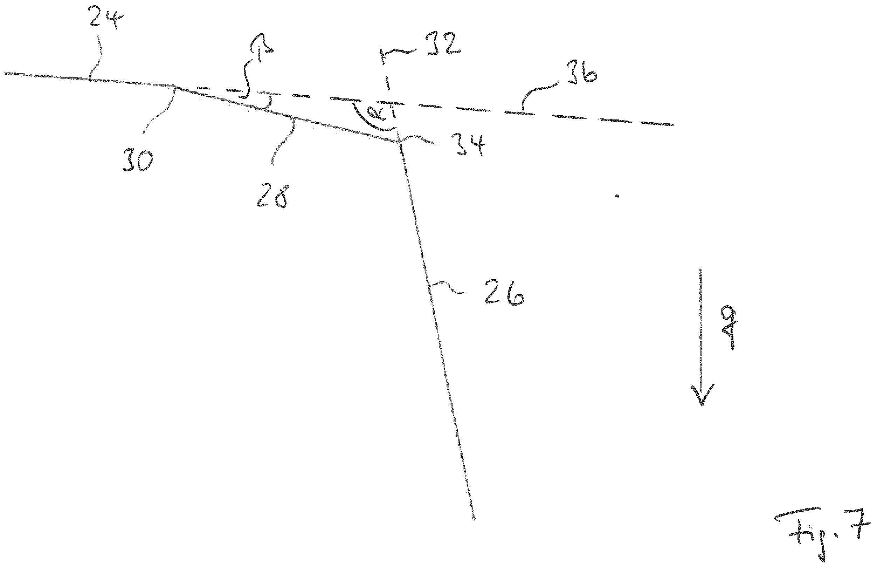

When article 16.1 moves along path 12, the leading end thereof slides along first sliding surface 24, third sliding surface 28 and second sliding surface 26. The same is true for the trailing end of article 16.1. Fig. 3 shows a stage of movement with the leading end sliding along third sliding surface 28. When the leading end of article 16.1 reaches third sliding surface 28 (Fig. 4), the part of the nose with third sliding surface 28 dives into cavity 22, so that article 16.1 can move further, tipping over front end 30 of first sliding surface 24. This tipping over results from the fact that a plane 32 tangent to second sliding surface 26 at the rear end 34 thereof includes an angle α of less than 180° with a plane 36 tangent to first sliding surface 24 at front end 30 thereof. In the shown embodiment, α = 106° (Fig. 7).

An angle β between plane 36 and third sliding surface 28 is 9° in the shown example (Fig. 7).

First, second and third sliding surfaces 24, 26 and 28 are flat in the shown example. However, the present invention also covers other structures. This is particularly true for third sliding surface 28 which may be curved, stepped or any combination thereof, for example. The flat form is, however, preferred. What is more is that third sliding surface 28 can be omitted so that first and second sliding surfaces 24 and 26 abut to one another.

What is important for the invention is that the overall structure of the nose on the one hand and article 16 on the other hand are such that article 16 tips over front end 30 of first sliding surface 24 when moving along path 12 with the nose diving into cavity 22.

Inventors found out that it is advantageous to make the width of the nose less than half of width W₁ of the paths.

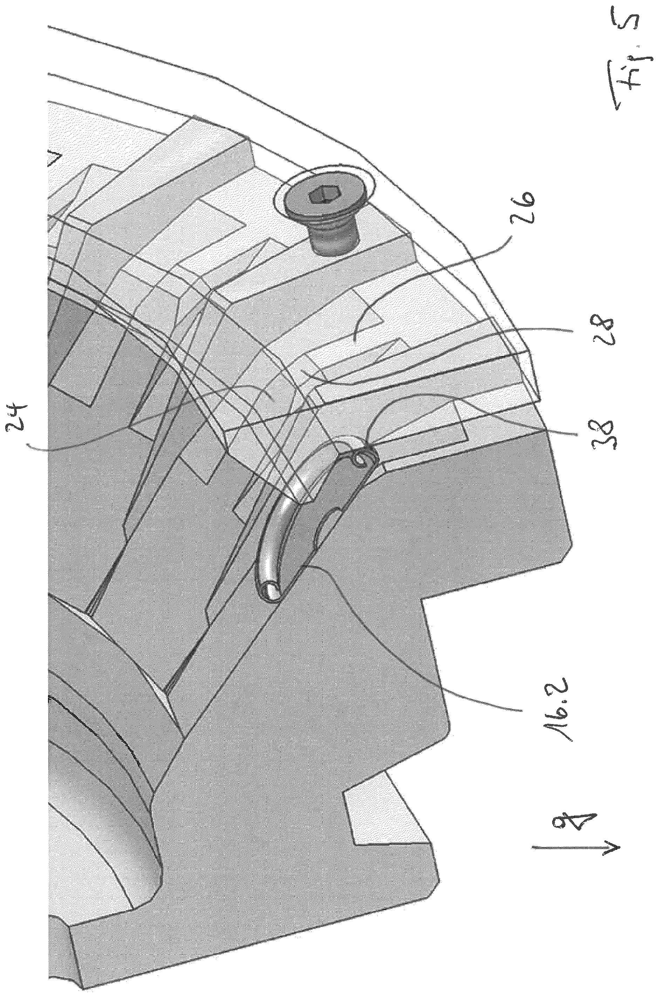

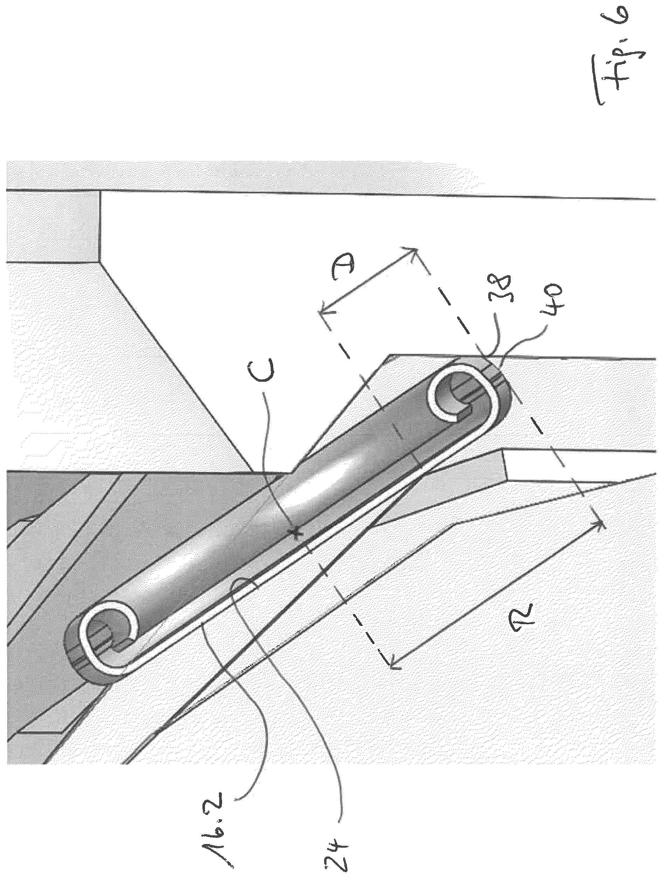

Figs. 5 and 6 refer to the movement of article 16.2 with first side 18 thereof facing first sliding surface 24. To this end, sorting ring 10 has a stop 38. The distance between said stop 38 and front end 30 of first sliding surface 24 is designated D in Fig. 6. Distance D is smaller than distance R between leading end 40 of article 16.2 and center of gravity C thereof.

Since in the case of article 16.2 the nose cannot dive into cavity 22 and D is smaller than R, article 16.2 will not tip over front end 30 of first sliding surface 24, but abut against stop 38. Thus, article 16.2 is held in a position as shown in Figs. 5 and 6 and cannot move on, contrary to article 16.1, which article 16.1 moves on into a magazine (not shown).

Since sorting ring 10 is moved by a motor (not shown) to rotate around its rotation axis 42, article 16.2 will fall back into the inner part of sorting ring 10 as soon as it is moved into the upper part thereof.

As detailed above, sorting ring 10 can distinguish between article 16.1 having a first orientation and article 16.2 having a second orientation and can move articles 16.1 further while returning articles 16.2 for a new round.

The characteristics of the invention disclosed in the above description, claims and drawings may be important for implementing the invention in its various embodiments both individually and also in any possible combination.

## Claims

1. Device for sorting articles (16) providing at least one path (12, 14) along which the articles can be moved,
said path comprising
a first sliding surface (24) having a front end (30) and
a second sliding surface (26) positioned downstream of the first sliding surface and having a rear end (34),
wherein said first and second sliding surfaces have predetermined widths and a plane (32) tangent to the second sliding surface at the rear end (34) thereof includes an angle (α) of less than 180° with a plane (36) tangent to the first sliding surface at the front end (30) thereof,
a stop (38) being positioned at a predetermined distance (D) from said front end of said first sliding surface.

2. Device according to claim 1, **characterised in that** the widths of the first and/or second sliding surfaces are smaller than the dimensions of a cavity (22) of the articles (16), preferably half of the width (W₁) of said path (12, 14) or less.

3. Device according to claim 1 or 2, **characterized in that** said first and second sliding surfaces (24, 26) are adjacent to one another.

4. Device according to claim 1 and 2, **characterised in that** there is a third (sliding) surface (28) or a gap between said first and second sliding surfaces (24, 26).

5. Device according to any preceding claim, **characterised in that** an angle (α) included by said planes (32, 36) tangent to said first and second sliding surfaces (24, 26) is chosen to avoid that said surfaces are touched by the bottom of a cavity (22) of articles (16) moving along said path (12, 14).

6. Device according to any preceding claim, **characterised in that** the force moving said articles along the path (12, 14) results from gravity.

7. Device according to any preceding claim, **characterised by** a motor adapted to move the device relative to the direction (g) of gravity.

8. Device according to any preceding claim, **characterised in that** said distance (D) between said front end (30) of said first sliding surface (24) and said stop (38) is less than the distance (R) between a leading end (40) of the articles (16) and their center of gravity (C).
